# EUROPEAN PATENT APPLICATION

(11) **EP 4 685 470 A1**
(43) Date of publication of application: **28.01.2026**
(21) Application number: 24190132.1
(22) Date of filing: 22.07.2024
(51) Int. Cl.: G01N 21/88

(54) **SYSTEM FOR REDUCING HALO EFFECT FOR LIGHTING DEVICES**

(71) Applicant: TPL Vision UK Ltd, CHARING (KENT) TN27 0JW (GB)
(72) Inventor: MCKINLEY, Jack, EDINBURGH, EH12 9EN (GB); Huber, Daniel, 88138 Hergensweiler (DE)
(74) Representative: Ipsilon

(57) **Abstract**

A lighting system (100) comprising a lighting device (1), the lighting device (1) comprising an opening (10) and light emitting elements (11), in particular LEDs, arranged around the opening (10),
the lighting system (1) further comprising a film (20) comprising an optical structure (21) configured to deflect light (E) emitted by the light emitting elements (11) inwards,
the film (20) comprising an aperture (25) overlapping at least partially with the opening (10) of the lighting device (1).

## Description

The present invention relates to a system for reducing halo effect for lighting devices.

CN217181375U discloses a diffusion film for a LED display module. The diffusion film comprises microstructures and/or nanostructures for deflecting light emitted by the LED lamp.

In machine vision and identification industry, lighting device with an opening in the center or middle of the device, where light emitting elements are not placed, are commonly used. Due to the lack of light emitting elements in the center of the device, when an object is inspected, there is a lack of homogeneity on brightness on the inspected object - depending on the opening angle of the light emitting elements and the working distance. This corresponds to the so called "halo effect" in lighting, which describes a phenomenon in which a bright glow or halo becomes visible around the inspected object.

There is a need to further improve existing lighting devices with an opening, in particular for use in machine vision and/or identification industry.

The invention achieves this objective by virtue of a lighting system comprising a lighting device, the lighting device comprising an opening and light emitting elements, in particular LEDs, arranged around the opening,
the lighting system further comprising a film comprising an optical structure configured to deflect light emitted by the light emitting elements inwards,
the film comprising an aperture overlapping at least partially with the opening of the lighting device.

Thanks to the system of the present invention, the light path of the light emitted by the light emitting elements are deviated. Therefore the present invention allows reducing or even eliminating the "Halo Effect" and focus the light towards a position where the object is being inspected. In this way, the brightness, homogeneity and efficiency of inspection may be improved.

Thanks to the invention, it is possible to deflect light emitted by a lighting device by mounting a film in the direction of the light emitted by the lighting device. There is no need to open the lighting device or change the orientation of the light emitting elements to change the direction of the light emitted.

In the present invention, the opening of the lighting device is a through opening that allows passage of light there through. The light emitting elements may be arranged in reflective or rotational symmetry around the opening. The opening may be centered with respect to the light emitting elements.

By "inwards", it is understood that light is deflected towards a central axis of the opening. The deflection may be by a degree of between 0 and 90 degrees with regard to a main direction of the light emitted by the light emitting element without the film.

The angle of deviation may be chosen according to an opening angle of the light emitting elements and/or a working distance of an inspection device comprising the lighting device. The optical structure may be configured to deflect the light emitted by the light emitting elements inwards by a degree of between 0 and 80 degrees. For example, the light emitted by the light emitting elements is deflected inwards by a degree of at least 10 degrees, moreover at least 15 degrees, in particular at least 20 degrees. More generally, the closer the inspected object is placed from the light source, the larger the deviation angle needs to be.

The film may comprise multiples layers of film, for example multiple nano/microstructure films, stacked together, for example, via lamination or held by an enclosure, to achieve an even more extreme light angle inwards, for example up to 80°.

The opening of the lighting device may be circular. In a variant, the opening of the lighting device may have a polygonal, for example substantially square or hexagonal shape. The opening may have a squircle shape. By "a *squircle shape*", it is to be understood a substantially square shape with rounded corners.

The lighting device may comprise a casing defining the opening. The light emitting elements may be mounted on a surface of the casing. For example, the housing may comprise, around the opening, hollows or depressions, for example in the form of slots or trenches for receiving the light emitting elements, The casing may have an annular form, in particular a ring shape. The lighting device may comprise focusing optics of the light emitted by the light emitting elements.

The film may be arranged parallel to the surface of the casing on which the light emitting elements are mounted. For example, the film may be arranged in a plan, in particular a plan parallel to the surface of the casing on which the light emitting elements are mounted. The aperture of the film may be centered in the film.

The film may be mounted as close as possible to the light emitting elements or focusing optics of the light emitted by the light emitting elements to ensure less light loss and thus more light is captured by the film. The film is preferably mounted outside the casing to maintain IP (« *Ingress Protection* ») rating as defined in IEC 60529. The film may cover completely the light emitting elements, in a direction parallel to the plan of the film. In particular, the optical structure may cover completely the light emitting elements in a direction parallel to the plan of the film.

In an embodiment, the film has a same shape and preferably a same dimension as the surface of the casing on which the light emitting elements are mounted. For example, the film may have an annular shape. The aperture of the film may overlap completely with the opening of lighting device.

In the present invention, it should be understood that cover or overlap does not necessarily indicate contact between the two elements covering one another or overlapping one with another. The two elements can be situated at a distance from each other and cover or overlap each other in respective plan in which they are situated.

The film may be attached to the lighting system, in particular to the casing, in particular in a detachable manner. For example, the film may be attached to the casing by adhesive, magnets, screws, locking ring, retainers or other mounting systems. The film may be embedded in the casing of the lighting device or disposed in a separate enclosure fixed to the lighting device.

The film may comprise a substrate made of a polycarbonate material. A thickness of the substrate may be less than 5 mm. A thickness of the substrate may be between 0,01 mm and 5 mm, for example between 0,02 mm and 3 mm, more specifically between 0,03 mm and 1 mm, for example between 0,04 mm and 0,5 mm, in particular between 0,05 mm and 0,2 mm.

The optical structure may comprise a prismatic structure, for example an asymmetric prismatic structure, on the substrate. The optical structure may be printed or transferred on the substrate or formed by grating or embossing of the substrate.

In an embodiment, the optical structure may be formed by holography, within a light shaping film. The resulted holographic structure changes the direction of the light passing the film. The optical structure may surface relief grating. In a variant the optical structure may comprise internal holographic structure or patterns located within the light shaping film.

The optical structure may be arranged on a face of the film facing the light emitting elements.

The film may comprise a layer of polarizer on a side of the substrate opposite to the side on which the optical structure is formed.

Preferably, the lighting device is of direct lighting type. By direct lighting, it is referred to a lighting solution where the majority of light is directed directly towards a specific aimed area.

According to another aspect, the invention provides an inspection system, the inspection system comprising an inspection device, for example a camera or a code scanning device, and a lighting system as defined above.

The invention allows orienting the light emitting elements in a same direction as an inspection device without the need to tilt the light emitting elements for eliminating the halo effect on the inspected object, thus facilitating the assembly of the system.

All the light emitting elements may be oriented at a same direction. In particular, the light emitting elements are oriented parallel to an axis of the inspection device. For example, the orientation of the light emitting elements may be parallel to the axis of the camera. The central axis of the opening may be parallel to the orientation of the light emitting elements and/or the orientation of the inspection device. In particular, the light emitting elements may be oriented symmetrically around the central axis of the opening.

By orientation of the light emitting elements, it is to be understood a main direction of the light emitted by the light emitting elements. For example, if the light emitting element emits light beams in parallel, the orientation of the light emitting elements is the direction of the light beams. If light beams emitted by the light emitting elements form an envelope, for example of cylindrical revolution, for example conic, in particular truncated, the orientation of the light emitting elements is the axis of revolution of the envelope.

By orientation of the inspection device, it is to be understood a direction of inspection of the inspection device. For example, the direction of inspection of the inspection device is perpendicular to a focal plan of a lens of the inspection device.

The film may be arranged in a plan perpendicular to the orientation of the inspection device.

According to another aspect, the invention provides a method for obtaining a lighting system as defined above, the method comprising:
- providing a lighting device comprising an opening and light emitting elements, in particular LEDs, arranged around the opening,
- providing a film comprising an aperture and an optical structure configured to deflect light emitted by the light emitting elements inwards,
- placing, facing the light emitting elements, the film in a manner that the aperture overlaps at least partially with the opening of the lighting device.

According to another aspect, the invention provides a method for deflecting light emitted by a lighting device, the lighting device comprising an opening and light emitting elements, in particular LEDs, arranged around the opening, the method comprising
- providing a film comprising an aperture and an optical structure configured to deflect light emitted by the light emitting elements inwards,
- placing the film facing the light emitting elements, the film being placed in a manner that the aperture overlaps at least partially with the opening of the lighting device.

The film may be placed outside a casing in which the light emitting elements are mounted.

The invention may be better understood on reading the following detailed description of nonlimiting examples of implementation of the invention, and on examining the appended drawing, in which:
- figure 1 illustrates schematically an inspection system,
- figures 2a and 2b illustrate different views of a lighting device,
- figure 3 shows a lighting system according to the invention,
- figures 4a and 4b illustrate different schematic views of a film comprising an optical structure according to the invention,
- figure 5 illustrates a variant of a film comprising an optical structure according to the invention,
- figure 6 shows the deflection of a light beam emitted by a lighting emitting diode by a film according to the invention, and
- figure 7 illustrates an inspection system according to the invention.

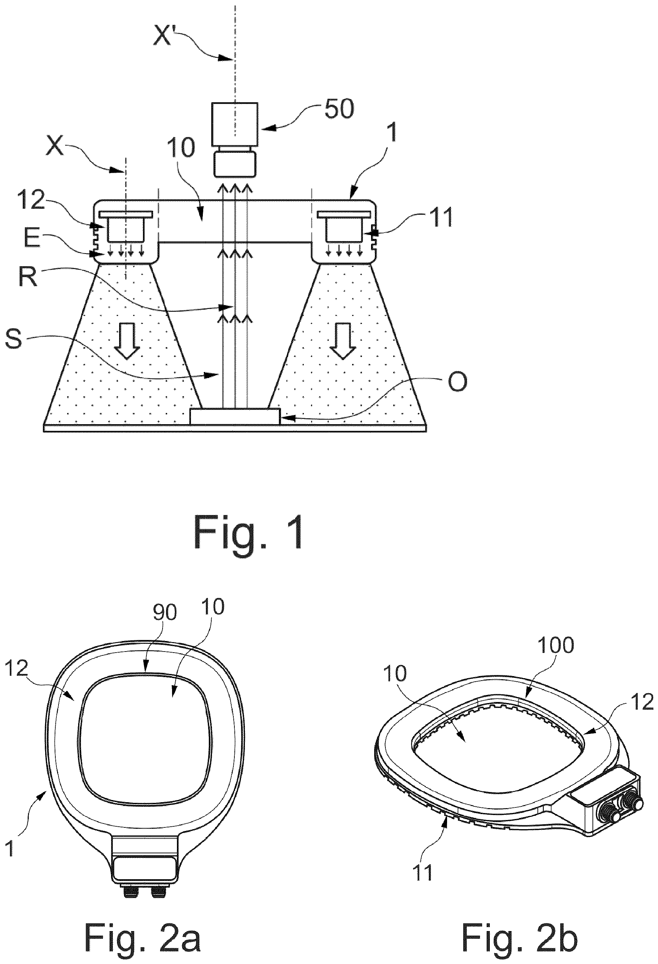

Figure 1 illustrates an inspection system that can be used in the machine vision industry. The inspection system comprises a lighting device 1 with light emitting elements 11. An object O under inspection is illuminated by light E emitted by light emitting elements 11. The lighting device 1 comprises an opening 10. An inspection device 50, for example a camera or a code scanning device, is placed above the opening 10. The opening 10 allows reflected light R from the object O to pass through the lighting device 1 before being received by the inspection device 50. The camera or a code scanning device may be configured to inspect the object O in short and/or long working distances.

Figures 2a and 2b show an example of a lighting device 1 comprising an opening 10. The device comprises a ring-shape casing 12 defining the opening 10 and a plurality of light emitting elements 11, in particular LEDs, arranged around the opening 10. The casing 12 has a substantially square or squircle shape body. In the illustrated example, the opening 10 has also a substantially square or squircle shape. A plurality of rows of LEDs may be arranged in parallel along each main side 90 of the opening 10.

The light emitting elements 11 may be mounted without any inclination with regard to the casing. For example, the light emitting elements 11 may be oriented in a direction perpendicular to a surface of the casing on which the light emitting elements 11 are mounted.

As illustrated in Figure 1, the lighting elements 11, in particular LEDs are oriented in the same direction X as the camera axis X' . In absence of a film according to the present invention, due to the lack of LEDs in the center of the casing 12, there is a lack of homogeneity on brightness on the inspected object - depending on the opening angle of the LEDs/Optics and the working distance. This causes, especially in short working distances, a black or weaker illuminated spot S in the center of the field of view of the inspection device 50, creating the "halo effect".

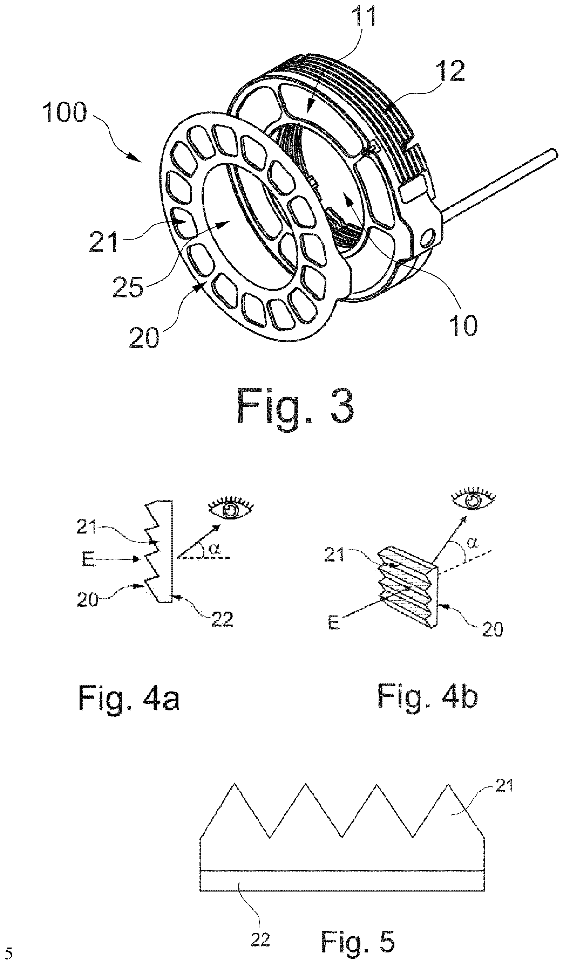

Figure 3 shows an example of a lighting system 100 according to the invention. The system 100 comprises a lighting device 1 comprising a casing 12 defining an opening 10 of the lighting device 1 and light emitting elements 11 mounted on the casing around the opening 1.

The system further comprises a film 20 comprising an optical structure 21 configured to deflect light from the light emitting elements 11. The film 20 is situated facing the light emitting elements 11. The film 20 comprises an aperture 25 that overlaps at least partially with the opening 10. Preferably, the aperture 25 has substantially the same shape and dimension as the opening 10 and overlaps with the opening 10.

Figures 4a and 4b illustrate respectively in cross sectional view and perspective view an example of a film 20 suitable for deflecting light. The film 20 comprises a substrate 22 and an optical structure 21 on the substrate. In the illustrated example, the optical structure 21 comprises an asymmetric prismatic structure.

In the variant illustrated in Fig.5, the optical structure 21 comprises a holographic structure The film 20 further comprises a layer of polarizer for deviating light. In the illustrated example, the holographic structure is represented as a surface relief grating. In a variant, the holographic structure can be internal and situated within the substrate.

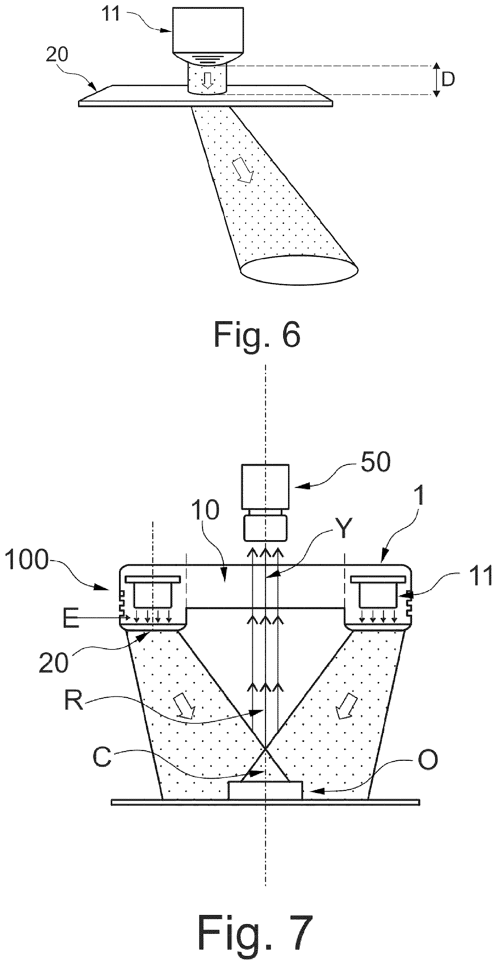

The film is preferably arranged in a plan parallel to a surface of the casing on which the light emitting elements are mounted. As illustrated in Fig.6, a distance D between the film 20 and the lighting emitting elements may be adjusted, for example as a function of the desired brightness. For the best brightness, it is best that it is mounted as close to the LEDs or focusing optics as possible to ensure less light loss and more is captured by the film.

Figure 7 illustrates schematically a lighting system 100 according to the present invention with a film 20 for deflecting inwards light E emitted by the light emitting elements 11. As can be seen, light E emitted by the light emitting elements 11 are deflected inwards towards a central axis Y of the opening 10 after passing through the film 20. Accordingly, the light may concentrate on a zone C of the object O to be inspected to provide better illumination of the zone.

The present invention is not limited to illustrated embodiments.

For example, a film with an optical structure different from a prismatic structure can be used for deflecting light emitted by the light emitting elements. For example, the optical structure may comprise embedded holographic structure and/or patterns to turn and shape the light into different directions.

The light emitting elements can be other than LEDs, for example laser diodes.

## Claims

1. A lighting system (100) comprising a lighting device (1), the lighting device (1) comprising an opening (10) and light emitting elements (11), in particular LEDs, arranged around the opening (10),
the lighting system (1) further comprising a film (20) comprising an optical structure (21) configured to deflect light (E) emitted by the light emitting elements (11) inwards,
the film (20) comprising an aperture (25) overlapping at least partially with the opening (10) of the lighting device (1).

2. The system as claimed in claim 1, the optical structure (21) being configured to deflect the light (E) emitted by the light emitting elements (11) inwards by a degree of between 0 and 80 degrees.

3. The system as claimed in claim 1 or 2, the lighting device (1) comprising a casing (12) defining the opening (10), the light emitting elements (11) being mounted on a surface of the casing (12).

4. The system as claimed in any one of claims 1 to 3, the opening (10) being centered with respect to the light emitting elements (11).

5. The system as claimed in any one of the preceding claims, the film (20) comprising a substrate (22) made of a polycarbonate material, a thickness of the substrate (22) being in particular less than 5 mm.

6. The system as claimed in any one of the preceding claims, the optical structure (21) being a prismatic structure, in particular an asymmetric prismatic structure.

7. The system as claimed in any one of the preceding claims, the film comprising a layer of polarizer (22) on a side of the substrate (22) opposite to the side on which the optical structure (21) is formed.

8. The system as claimed in any one of the preceding claims, the optical structure (21) being arranged on a face of the film facing the light emitting elements (11).

9. The system as claimed in any one of the preceding claims, the film (20) being attached to the lighting system by adhesive, magnets, screws, locking ring, retainers.

10. An inspection system, the inspection system comprising an inspection device (50) and a lighting system (100) according to any one of the preceding claims.

11. The inspection system according to the previous claim, the inspection device (50) being a camera or a code scanning device.

12. The inspection system according to claim 10 or 11, the light emitting elements (11) being oriented parallel to an axis (X) of the inspection device (50).

13. A method for deflecting light (E) emitted by a lighting device (100), the lighting device (100) comprising an opening (10) and light emitting elements (11), in particular LEDs, arranged around the opening (10), the method comprising:
- providing a film with an aperture and an optical structure (21) configured to deflect light emitted by the light emitting elements inwards,
- placing the film (20) facing the light emitting elements (E), the film being placed in a manner that the aperture overlaps at least partially with the opening of the lighting device.

14. The method according to the previous claim, the film (20) being placed outside a casing in which the light emitting elements (11) are mounted.
